# EUROPEAN PATENT APPLICATION

(11) **EP 1 340 771 A1**
(43) Date of publication of application: **03.09.2003**
(21) Application number: 02290490.8
(22) Date of filing: 28.02.2002
(51) Int. Cl.: C08B 37/10, A61K 31/727

(54) **Nitro-derivatives of low molecular weight heparin**

(71) Applicant: Nicox S.A, 06906 Sophia Antipolis Cedex (FR)
(72) Inventor: Bolla, Manlio, 20138 Milano (IT); Monopoli, Angela, 20144 Milano (IT); Del Soldato, Piero, 20152 Monza (IT); Torri, Giangiacomo, 20133 Milano (IT); Naggi, Annamaria, 20025 Legnano (IT); Mazzoni, Giulia, 40129 Bologna (IT)
(74) Representative: Barchielli, Giovanna

(57) **Abstract**

The invention concerns Low Molecular Weight Heparin having an average molecular weight by weight comprised between 3,000 and 6,500 D and containing nitro groups -ONO₂ covalently bonded to the saccharide structure, and pharmaceutical compositions comprising it.

The Low Molecular Weight Heparin according to the invention is disclosed for use as a medicament, more specifically for use in the treatment and prevention of pathologies associated with dysfunctions of haemostatic and cardiovascular systems.

## Description

### Summary of the Invention

The present invention concerns Nitro-Derivatives of Low Molecular Weight Heparin, a process for its preparation and the use thereof as a medicament.

### Background of the invention

Heparin is a mucopolysaccharide comprising repeating units formed of an uronic acid and a hexosamine residue. It can be obtained by extraction from beef, porcine, sheep, whale or other mammalian tissue with a solution of potassium acetate, alkaline ammonium sulfate and the like.

The heparins have valuable anticoagulant and antithrombotic properties; however the marked anticoagulant activity of natural heparins can cause bleeding which is one of the major limitations to extent their effective use.

Approximately 25 years ago, it has become clear that different heparin fractions have different anticoagulant effects; consequently the ratio between the antithrombotic and hemorrhagic properties of heparins can vary considerably from fraction to fraction. Hence, it has been necessary to fragment the native heparins into molecules of lower average molecular weights.

Commercial heparin has average molecular weight by weight ranging from about 10,000 to about 25,000 Da and are known, in the state of the art, different ways to achieve heparin fractions varying in molecular weight and pharmaceutical properties by physical separation, enzymatic or chemical depolymerization.

Heparin fragments may be obtained by depolimerization with heparinase as described in US 4,847,338 or by depolimerization with nitrous acid which results in the formation of terminal units of anhydromannose (US 4,500,519 and US 4,351,938).

WO 86/06729 discloses oligosaccharides, obtained by radical depolymerization of heparins, heparan sulfates, dermatan sulfates, chondroitin sulfates and hyaluronic acid generated from a peracid or a peroxide in the presence of a catalyst selected from the group consisting of Cu⁺⁺, Fe⁺⁺, Cr⁺⁺⁺ and Cr₂-O₇⁻⁻.

Other chemical agents employed for the heparin depolymerization are: organic or mineral bases providing beta-elimination from a heparin ester (EP 0 040 144 and US 5,389,618), periodate (US 4,990,502), ascorbic acid-hydrogen peroxide mixture (US 4,533,549), ascorbic acid-hydrogen peroxide-copper acetate mixture (US 4,629,699) and quaternary ammonium hydroxide for the depolymerization of quaternary ammonium salt of heparin.

US 4,987,222 describes a process for the controlled preparation of low molecular weight glucosaminoglycans, by treating conventional high molecular weight glucosaminoglycans with gamma rays.

FR 2440376 and US 4692435 disclose the preparation of heparin fragments by solvent fractionation.

With the expression Low Molecular Weight (LMW) heparin it is intended heparin fragments with Mw comprised between 3,000 and 6,500 Da and they are mainly used in the prophylaxis and treatment of thromboses. For instance, WO 86/06729 describes a heparin with low molecular weight, ranging between 3,500 and 8,000 Da, having marked antithrombotic activity with no or scarce anticoagulant effect.

Other pharmacological properties of LMW-heparins are known in the state of the art

WO 00/35462 describes the use of heparins of molecular weight ranging from 1,000 to 10,000 Da, preferably from 1,500 to 6,000 Da, more preferably from 4,000 to 5,000 Da, for preventing and/or treating motor neuron diseases.

US 4,990,502 teaches heparin possessing a MW between 4,800 and 9,000 Da which are effective in inhibiting cell growth, complement activation or inflammatory reactions, or regulating cell growth factors.

US 5,908,837 discloses heparin having a molecular weight ranging from 3,000 to 6,000 Da able to inhibit the ability of T cells and macrophages to secrete TNF-α (Tumor Necrosis Factor alpha), consequently, to prevent or treat all disorders linked to pathological processes involving the induction of TNF-α secretion such as those related to autoimmune diseases, allergy, inflammatory diseases (in particular, inflammatory bowel disease) or acquired immunodeficiency syndrome (AIDS). Also they are useful in the treatment of diabetes type I, periodontal disease, uveitis, rheumatic diseases, atherosclerosis vasculitis or multiple sclerosis. EP 0 710 483 teaches the use of heparins having a MW equal to 4,500 ± 1,000 Da in the treatment of patients suffering chronic renal insufficiency submitted to peritoneal dialysis.

The preparation of polysaccharides containing NO releasing groups has been recently proposed; however the direct introduction of nitro groups on heparin or heparin-like structures is not known.

US 6,261,594 discloses the preparation of chitosan-based polymeric nitric oxide donors obtained by introduction of a NONO group directly bonded to the backbone of the chitosan polymer.

J. E Saavedra et al, Bioorganic & Medicinal Chemistry Letters 10 (2000) 751-753, describe heparin/diazeniumdiolates conjugates that generate nitric oxide. However, the synthesis of these compounds is very complicated. In addition, the specific NO releasing group introduced in the heparin chain has various drawbacks and, consequently it is not suitable for pharmaceutical application.

### Description of the invention

The present invention provides Low Molecular Weight-heparin containing nitro groups covalently bonded to the saccharide structure.

With the expression Low Molecular Weight (LMW) heparin it is intended heparin fragments having an average molecular weight by weight higher than 3,000 Da and lower than 6,500.

In a preferred embodiment of the invention, these compounds are able to release NO in biological fluids/tissues at levels that are therapeutically effective. The expression heparin fragments indicates a polysaccharide prevalently formed of disaccharide repeating units formed of uronic acid and hexosamine, as indicated in Formula I

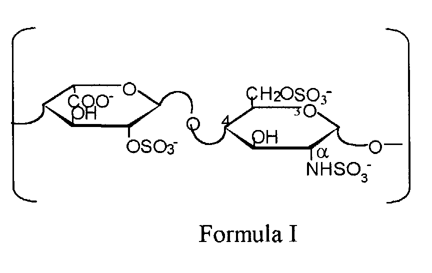

The compounds according to the present invention are useful in the treatment and in the prevention of pathologies associated with dysfunctions of the haemostatic and cardiovascular systems, such as arterial thromboembolism, venous thromboembolism, post surgical deep-vein thrombosis, pulmonary embolism, ischemic stroke, myocardial infarction and unstable angina, percutaneous transluminal coronary angioplasty (PCTA), atherosclerosis, endothelial dysfunctions of inflammatory nature such as flebites, and occurring with major pathologies such as diabetes or hypertension or caused by bacterial and viral infections.

The LMW nitroheparin according to the invention can be prepared according to different routes.

In a first embodiment, LMW-heparin is prepared by depolymerization of natural heparin and then subjected to nitration.

The depolymerization reaction can also take place without modifying the hexosamine ring, for example by enzymatic hydrolysis with liase or hydrolase, by chemical depolymerization with mineral acids (e.g. sulfuric acid or hydrochloric acid), by demolition reaction of Smith or induced by gamma rays. The chemically depolymerization reaction by using nitrous acid results in the introduction of new functional groups: di- and oligosaccharides are obtained that present a terminal CHO which, by further reaction, gives rise to a new CH₂OH or a new amino group:

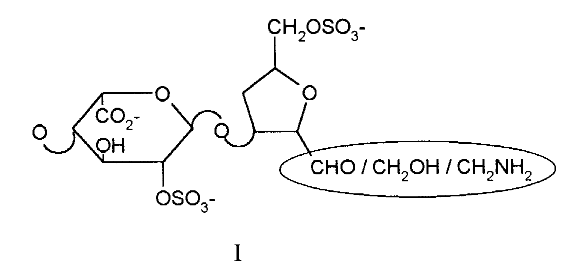

In another embodiment, LMW-nitroheparin can be chemically modified according to techniques well known in the art.

For example, N-sulfate groups of the hexosamino residue can be transformed into amino groups through desulfation reaction; the free amino groups can be N-acetylated; the sulfate groups of uronic acids can give rise to epoxy-groups through desulfation reaction; free amino groups and epoxy groups can be used to fix the polysaccharide to a polymeric support, as described in WO 99/27976 (Baxter).

It is also known the generation of a CH₂0H group by desulfation of the position 6 of hexosamine and another possible chemical modification is the supersulfation with adducts of pyridine - sulfur trioxide (K. Nagasawa; H. Uchiyama; N. Wajima, Carbohydr. Res. 158 (1986), 183-190; A. Ogamo, A. Metori; H. Uchiyama; K. Nagasawa, Carbohydr. Res. 193 (1989), 165-172; R.N. Rey; K.G. Ludwig-Baxter; A.S. Perlin, Carbohydr : *Res.* 210 (1991), 299-310) or with a mixture of sulfuric and chlorosulfonic acids (Naggi e al., *Biochem. Pharmacol*. 36, 1895-1900, 1987).

LMW-heparins and their derivatives obtained according to the above mentioned methods show a very high affinity, amongst others, towards endothelium, platelets and leukocytes. Their use as a carrier of a group capable of releasing NO such as a nitro group allows a selective use and, consequently, a reduced dosing of the active principle.

The nitration can take place in different positions of the saccharide units of heparin fragments. The preferred positions for the introduction of the nitro-containing groups are the following: CH₂OH in 6 of desulfated hexosamine, CHOH in 3 of hexosamine and of uronic acid, carboxy group in 6 of uronic acid, CHOH in 2 of desulfated uronic acid and NH₂ of desulfated hexosamine.

The nitro group can be covalently bonded to the saccharide structure either directly (e.g. through nitration of a carbon of the saccharide unit) or through a divalent radical acting as a spacer between the saccharide unit and the nitro group. Suitable spacers are divalent radicals derived from C₂-C₂₀ aliphatic or aromatic hydrocarbons, ethers, polyethers, carboxylic acids or their derivatives, and the like.

The LMW-nitroheparins according to the invention can optionally be used in combination with a compound that donates, transfers or releases nitric oxide as a charges specie, i.e. nitrosonium (NO+) or nitroxyl (NO⁻), or as the neutral specie, nitric oxide (NO) and/or a compound that stimulates endogenous production of NO or EDRF (Endothelium Derived Relaxing Farctor) in vivo.

A first path to the preparation of LMW-nitroheparins according to the invention is by direct nitration by means of a nitrating mixture. The reaction is preferably carried out by first preparing the nitrating mixture, wherein the previously dried LMW-heparin is added in small amounts under stirring. Examples of nitrating mixtures are sulfuric acid-nitric acid, phosphoric acid-nitric acid, acetic anhydride-nitric acid, nitrous oxide-sulfuric acid. Preferred mixtures are the mixture sulfuric acid-nitric acid, also called sulfo-nitric mixture and the mixture acetic anhydride-nitric acid. More preferred mixture is the mixture acetic anhydride-nitric acid.

Using the mixture acetic anhydride-nitric acid, the molar ratio between acetic anhydride and nitric acid can vary in a broad range and is preferably comprised between 1:1 and 1:2, more preferably between 1:1.4 and 1:1.6. The amount of nitro groups per saccharide unit also varies considerably, and the ratio in equivalents between saccharide units and nitro groups is preferably comprised between 0.1 and 1.25, more preferably comprised between 0.2 and 1.10, most preferably between 0.3 and 1.00.

Another synthetic path for the synthesis of LMW-nitroheparin according to the invention is by haloacylation followed by nitration. In this case, it is possible to prepare first a LMW-heparin containing N-desulfated hexosamine. The N-desulfated hexosamine is then reacted with a halo-anhydride such as iodoacetic anhydride, obtaining the corresponding amide in position 2 of the hexosamine. The iodine atom is then substituted with a nitro group by reaction with a suitable nitrate. By using the suitable reaction conditions, it is possible to dose the amount of N-desulfation and, consequently, the amount of nitro groups introduced. Examples of suitable nitrates are AgNO₃ and NBu₄NO₃. It is possible to use anhydrides different from iodoacetic anhydride, such as the anhydride of a ω-halocarboxylic acid, obtaining in this way LMW-nitroheparin having a different spacer group. Preferred halogens are iodine and bromine. More preferred is iodine. Using LMW-heparin and iodoacetic anhydride as starting materials, the reaction scheme is the following:

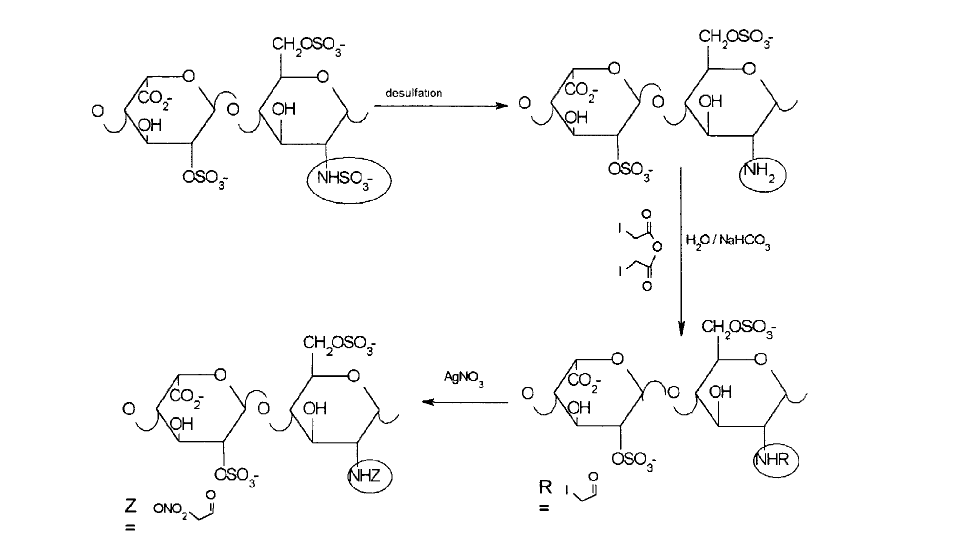

It is also possible to acylate the position 6 of desulfated hexosamine. In this case it is preferable to use compounds of formula X-(CH₂)ₙ-COY wherein X is chlorine, bromine, iodine or tosyl; preferably X is bromine; Y is chlorine, mercaptothiazole, mercaptobenzothiazole, mercaptobenzoxazole, p-nitrophenol. The reaction scheme is the following:

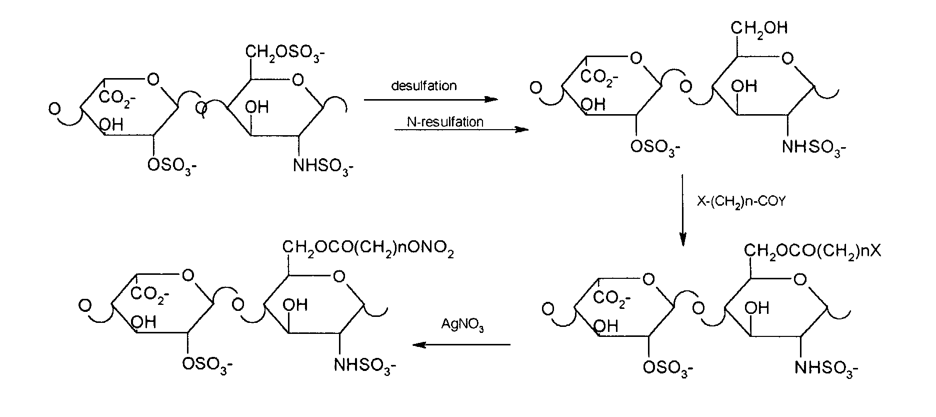

Another possible route of preparation of nitroderivatives is described in the following scheme, where the carboxyl group is activated by reaction with di cyclohexylcarbodiimide and then reacted with a compound of general formula X(CH₂)ₙY where Y is Cl, Br, I, O-tosyl, ONO₂ and X is OH or NH₂:

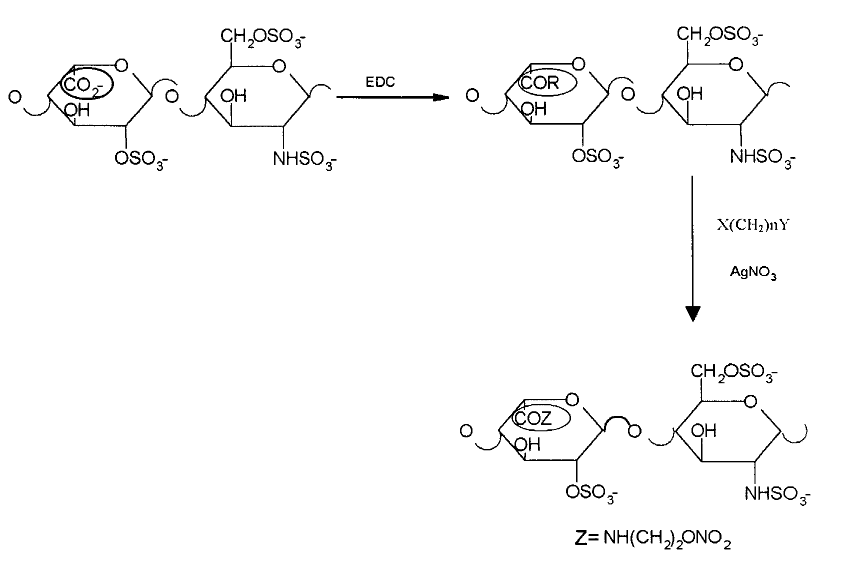

The nitro-derivatives of LMW heparin according to the invention can optionally be used in combination with a compound that donates, transfers or releases nitric oxide elevates endogenous levels of nitric oxide, or is a substrate for nitric oxide synthase.

The compounds according to the present invention can also be used in combination with active substances normally used in the treatment of dysfunctions of the blood coagulating system and thrombotic system such as thrombolitic drugs, anticoagulant drugs, anti-platelet drugs, glycoprotein GP IIb/IIIa complex antagonists, thrombin antagonists. The active substance normally used in the treatment of disfunctions of blood coagulating system and thrombotic system can be those known in the art including for example aspirin, dypiridamole, ticlopidine, clopidsrogrel, hirudine or new nitrooxyderivatives of NSAIDs, for example 2-(acetyloxy)benzoic acid-3-(nitroxymethyl)phenyl ester described in EP 759 899.

The compounds according to the invention can be used in the preparation of pharmaceutical compositions in combination with the appropriate inert carrier, for topic, parenteral and oral use.

The formulation of therapeutic compositions is well known to persons skilled in this field. Suitable pharmaceutically acceptable carriers and/or diluents include any and all conventional solvents, dispersion media, fillers, solid carriers, aqueous solutions, coatings, antibacterial and antifungal agents, isotonic and absorption delaying agents, and the like. The use of such media and agents for pharmaceutically active substances is well known in the art, and it is described, by way of example, in Remington's 5 Pharmaceutical Sciences, 18th Edition, Mack Publishing Company, Pennsylvania, US.

The present invention is now more deeply described through examples that must be considered explanatory but that are not intended to limit in any way the invention itself.

### Experimental section

The reactions have been carried out on the following substrates:
1. LMW-heparin calcium salt obtained by depolymerization with NaNO₂. The analytical characteristics were the following:

| | |
|---|---|
| Mw 4400 | Mw/Mn 1.7 |
| Elemental analysis: | C: 19.50 %; N: 1.62 %; |
| atom of N per saccharide: | 0.43 |

### Example 1

### Preparation of nitroheparin via nitration of LMW heparin with nitro-acetic mixture

Nitroacetic mixture was prepared by dropping, over 45 minutes, 48 ml of cold acetic anhydride in 72 ml of nitric acid (90%) kept under stirring and cooled at -20°C in an N₂/acetone bath. At the end, 300 mg of LMW-heparin were added. When the temperature was stabilized, N₂/acetone bath was changed with an ice bath; the mixture was stirred 3.5 hours at 0° C. The mixture was poured into 200 ml of a mixture diethyl ether - n-hexane 1:1 at -70°C in an N₂/acetone bath. After 1 hour the sample was filtered, the precipitate dissolved in water, neutralized with a solution of diluted NaOH. The sample was dialyzed in dialysis tubes with a 1,000 Da cut-off against water for 48 hours. At the end, the sample was concentrated through evaporation at a reduced pressure and at a low temperature. The product was purified by gel filtration on Sephadex G10.

The product has the following characteristics:
Elemental analysis: C: 21.39%; N: 4.31%;
   N per saccharide: 1.0
   ONO₂ per saccharide: 0.5
Yield=21.3%

For the assessment of anticoagulant activity, two standard clotting tests were run using a ACL 7000 coagulometer, and all reagent kits from Instrumentation Laboratories, following the manifacturer instructions. Activated Partial Thromboplastin Time (aPTT) and Thrombin clotting Time (TT) were performed using plasma samples of 300 ul incubated with different concentration of compounds. Test were run automatically by the coagulometer. Data were plotted on computer to obtain concentration response curves or histogram plots, comparing control (vehicle treated), standard (reference compound) and treated (compound in this invention) samples.

The activity against the factor Xa (anti-Xa), a specific test intended to evaluate anti thrombotic activity was done as chromogenic test using the instrument and specific assay kits as above.

The anti platelet activity was explored by aggregometric assays on a Chrono-Log VS 560 instrument, using the nephelometric tecnique. Briefly, platelet rich plasma (PRP) was incubated with different concentrations of the compounds to analyse complete concentration response curves and then stimulated with a proaggregating agent (such as ADP).

To assess the NO release from the compounds of the invention, experiments were performed in presence or absence of direct inhibitors of soluble guanilyl cyclase, the enzyme responsible for the NO derived response.

## Claims

1. Low molecular weight heparin having an average molecular weight by weight comprised between 3,000 and 6,500 Da, extremes excluded, **characterized in that** it contains nitro groups -ONO₂ covalently bonded to the saccharide structure.

2. Heparin according to claim 1, wherein the equivalents ratio between nitro groups and saccharide units varies from 0.10 to 1.25.

3. Heparin according to claim 2, wherein the equivalents ratio between nitro groups and saccharide units varies from 0.20 to 1.00.

4. Heparin according to claims 1-3 wherein Mw is equal to 5,000 + 400 Da.

5. Heparin according to claims 1-4 wherein the nitro groups are introduced by reaction of one of the following positions: CH₂0H in 6 of desulfated hexosamine, CHOH in 3 of hexosamine and of uronic acid, carboxy group in 6 of uronic acid, CHOH in 2 of desulfated uronic acid and NH₂ of desulfated hexosamine.

6. Heparin according to claims 1-5 wherein the nitro groups are introduced by direct nitration using a nitrating mixture.

7. Heparin according to claims 1-6 wherein the nitro group is covalently bonded to the saccharide structure through a divalent radical R acting as a spacer between the polymeric chain and the nitro group, wherein R is a C₂-C₂₀ aliphatic or aromatic hydrocarbon, an ether, a polyether, a carboxylic acid or its derivatives.

8. Process for the preparation of low molecular weight heparin according to claims 1-7 comprising the following steps:
a) depolymerization of natural heparin by chemical enzymatic or physical means
b) nitration by means of nitrating mixture

9. Heparin according to claims 1-7 for use as a medicament.

10. Pharmaceutical compositions containing heparin according to claims 1-7 admixed with pharmaceutically acceptable carriers.

11. Heparin according to claims 1-7 for use in the treatment and prevention of pathologies associated with dysfunctions of haemostatic and cardiovascular systems.

12. A composition comprising heparin according to claims 1-7 and a compound that donates, transfers or releases nitric oxide elevates endogenous levels of nitric oxide, or is a substrate for nitric oxide synthase.

13. A composition comprising heparin according to claims 1-7 in combination with one or more active substances normally used in the treatment of dysfunctions of the blood coagulating system and thrombotic system selected from the groups consisting of thrombolitic drugs, anticoagulant drugs, anti-platelet drugs, glycoprotein GP IIb/IIIa complex antagonists, thrombin antagonists.
